Europäisches Patentamt

(19) European Patent Office

Office européen des brevets

(11) EP 0 947 403 A2

(12) EUROPEAN PATENT APPLICATION

(43) Date of publication:
06.10.1999 Bulletin 1999/40

(51) Int. Cl.⁶: B60S 1/08

(21) Application number: 99302621.0

(22) Date of filing: 01.04.1999

(84) Designated Contracting States:
AT BE CH CY DE DK ES FI FR GB GR IE IT LI LU
MC NL PT SE
Designated Extension States:
AL LT LV MK RO SI

(30) Priority: 03.04.1998 JP 9180198
03.04.1998 JP 9180398

(71) Applicant:
Nippon Sheet Glass Co., Ltd.
Osaka-shi, Osaka (JP)

(72) Inventor:
Tanaka, Shuhei,
c/o Nippon Sheet Glass Co., Ltd.
Chuo-ku, Osaka-shi, Osaka (JP)

(74) Representative:
Leale, Robin George
Frank B. Dehn & Co.,European Patent Attorneys,
179 Queen Victoria Street
London EC4V 4EL (GB)

(54) Water detection sensor having signal transmission function

(57) A water drop detection sensor having a signal transmission function, for detecting plural water drops adhering to or present upon a windshield, as well as being able to transmit a signal between the inside of a vehicle and the outside, comprising: a glass windshield 2; a light emitting means 5 for introducing detection light into the glass windshield; a light receiving means 6 for detecting reflected detection light, the reflected detection light being reflected by total internal reflection within the glass windshield; and a light signal transmission means 9 for conducting optical communication. The light emitting means and the light receiving means are fixed on an interior side surface of the glass windshield 2 with adhesive material 4, and the signal transmission means 9 is also fixed on the interior side surface of the glass windshield 2 with adhesive material 4, but except reflection points of the detection light reflected therein.

FIG. 2

EP 0 947 403 A2

## Description

The present invention relates to a water detection sensor having a signal transmission function, the detection sensor being for detecting the presence or adhesion of water upon a light-permeable substrate such as a window glass used in an automobile or other vehicle, as well as being able to conduct signal transmission outside of the vehicle.

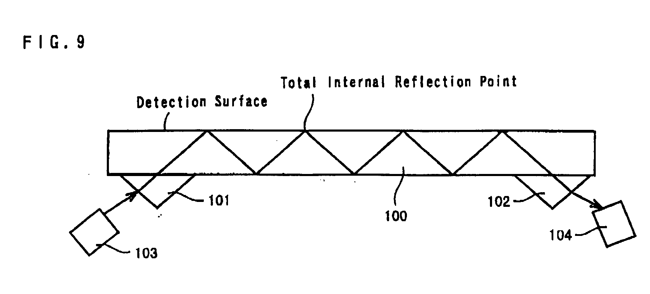

Conventionally, attempts have been made to detect water drops present on or adhering upon the front glass (windshield) of a car so as to automatically operate or initiate a wiper, and an example of a substrate having such a detection function is known, having the structure as shown in Fig. 9 attached.

In Fig. 9, a pair of prisms 101 and 102 are attached onto the surface of a transparent substrate 100 -- such as a glass plate or the like -- in which light from a light source 103 is introduced through a prism 101 at an incident angle so as to cause total internal reflection of the light. By setting the incident angle so that total internal reflection will not occur if a liquid such as water is present upon or adheres to the surface of the transparent substrate 100, the amount of light that undergoes the total internal reflection changes depending upon the existence of the liquid at the points of total internal reflection on the glass surface. Thereby the existence of the liquid can be detected by detecting the amount of light received by the light receiving element 104.

In Japanese Patent Laying-Open No. Sho 60-216245 (1985), it is disclosed that the prism is set at such an angle that the light reflected from the water drops is incident upon the light receiving element only when the water drops adhere upon the glass surface, since the sensitivity for detecting the water drops is not enough with the conventional detection method similar to that explained above.

Further, in Japanese Patent Laying-Open No. Sho 62-163949 (1987), there is disclosed a construction in which there are Provided two light sources, wherein the incident angle of the light from one of these is set to be greater than a critical angle for the total internal reflection to occur upon the detection surface thereof, while that the light from the other source is set to be less than the critical angle for the total internal reflection to occur upon detection surface thereof, thereby enabling discrimination of the presence or absence of water drops upon a glass surface.

Furthermore, in Japanese Patent Laying-Open No. Hei 8-261974 (1996), there is also disclosed a construction in which a transparent electrode of the no-called "comb" shape is positioned inside the glass plate to detect changes in electrostatic capacity, thereby controlling the starting or stopping a window or a heater.

Moreover, in Japanese Patent Laying-Open No. Hei 6-509652 (1994) -- later a PCT application -- there is also disclosed a construction of a detection unit, such as a prism, which is attached upon the interior surface of the windshield through an intermediate layer which has two adhesive surfaces. This device also detects water drops on the outside surface of the windshield and controls the operation of a wiper for the windshield depending on the detected result.

With the transparent substrate having the conventional optical detection function, one or more prisms is necessary for introducing the light into the glass to undergo total internal reflection, and these prisms must be closely contacted upon the glass surface, therefore requiring excessive labor and time for the fitting or mounting operation. In particular, because almost all windshields for use in a car -- or other wind-shielding glass plates used in other vehicles -- are designed to have a curved surface, so it is difficult therefore to contact the prism upon the glass surface closely.

Moreover, for preventing unnecessary reflection at the boundary surface between the prism and the glass, the refractive indexes of the two also must be selected so as to be as close to each other as possible (i.e., refractive index matching). For this reason, a matching layer can be provided thereinbetween, but this increases the number of steps for manufacturing and brings about a disadvantage in terms of cost.

On the contrary, the method in which the water drops are detected by the variation of electric resistance or electrostatic capacity between the electrodes, such as disclosed in Japanese Patent Laying-Open No. Hei 8-261974 (1996), is inferior in durability and sensitivity to that of the above-described optical methods. In particular, for a windshield used in a car, it is important that the detected signal corresponds to the physical conditions actually seen by the driver or co-driver, and in this sense, an optical-method sensor is preferable.

According to the present invention, there is provided a water detection sensor having signal transmission function, for detecting water adhering to or present upon a light permeable substrate comprising:

alight permeable substrate;

light emitting means for introducing detection light into said substrate;

light receiving means for detecting reflected detection light, said reflected detection light being reflected by total internal reflection within said substrate;

signal transmission means for conducting signal transmission,
wherein said light emitting means and said light receiving means are provided on an interior side surface of said substrate, and said signal transmission means is provided on the interior side surface of said substrate except reflection points of said detection light reflected therein.

With this sensor, the prisms are not necessary, thereby obtaining a simple construction. Further, the light enters into the light-permeable substrate at a certain incident angle and undergoes total internal reflection therein, and thus it can be utilized effectively. Further the detection surface for any water adhering on the surface of the light-permeable substrate comprises a reflection surface made up of a large number of reflection points, rather than dispersed reflection points. Therefore, the area for detection of the water drops is large, compared to that when detecting only those water drops adhering to or present upon the dispersed reflection points, thus improving the precision of detection. Further, with provision of the signal transmission means for enabling transmission to and from an outside device, the applicability of the sensor is widened considerably.

Also, according to the present invention, there is provided a water detection sensor having signal transmission function, for detecting water adhering to or present upon a light permeable substrate, comprising:

a light permeable substrate including an intermediate layer therein;

light emitting means for introducing detection light into said substrate;

light receiving means for detecting reflected detection light, said reflected detection light being reflected by total internal reflection within said substrate; and

signal transmission means for conducting signal transmission,
wherein said light emitting means and said light receiving means are provided on an interior side surface of said substrate, said signal transmission means is provided on the interior side surface of said substrate except reflection points of said detection light reflected therein, and wherein a portion of said intermediate layer opposing said light receiving means is formed with a reflection layer.

With this, since said light receiving means is provided on said light-permeable substrate, and a portion of said intermediate layer opposing to said light receiving means is formed with a reflection layer, in which layer is formed an opening for receiving exterior ambient light, the light emitted from the light emitting means is prevented from escaping outside of said light-permeable substrate without being reflected by total internal reflection therein. Further, with provision of the signal transmission means for enabling transmission to and from an outside device, the applicability of the sensor is widened.

Further, according to the present invention, there is provided a water detection sensor having signal transmission function, for detecting water adhering to or present upon a light permeable substrate, comprising:

a light permeable substrate including an intermediate layer therein;

light emitting means for introducing detection light into said light permeable substrate;

light receiving means for detecting reflected detection light, said reflected detection light being reflected by total internal reflection upon reflection points at a non-pasted portion of black ceramic within said light permeable substrate; and

signal transmission means for conducting signal transmission,
wherein said light emitting means and said light receiving means are provided on an interior side surface of said light permeable substrate, and said signal transmission means is provided in said non-pasted portion of black ceramic through an air layer also on the interior side surface of said substrate.

With this, the light emitting means, the light receiving means and the signal transmission means (light beacon) are fixed on a portion pasted with the black ceramic in a belt-like manner at the periphery portion of the light-permeable substrate on the other surface thereof, and it can be attached together with other equipment within a common space, thereby contributing to saving space required for attaching. Further, with provision of the signal transmission means for enabling transmission to and from an outside device, the applicability of the sensor is widened.

Furthermore, according to the present invention, there is provided a water detection sensor having signal transmission function, for detecting water adhering to or present upon a windshield, comprising:

a light permeable substrate including an intermediate layer therein;

light emitting means for introducing detection light into said light permeable substrate;

light receiving means for detecting reflected detection light, said reflected detection light being reflected by total internal reflection upon reflection points at a non-pasted portion of black ceramic within said substrate; and

signal transmission means for conducting signal transmission,
wherein said light emitting means and said light receiving means are provided on an interior side surface of said light permeable substrate, and said signal transmission means is provided in said non-pasted portion of black ceramic on the interior side surface of said substrate except the reflection points thereof.

With this, since the ambient light receiving means is fixed except each point on the other side of the light-permeable substrate, where the detection light experiences the total internal reflection, it can be fixed directly without provision of the air layer, thereby providing for an easy installation thereof. Further, with provision of the signal transmission means for enabling transmission to and from an outside device, the applicability of the sensor is widened.

Further, said signal transmission means can be constructed with a light signal emission means conducting the transmission through or by using light waves, or with a sonic wave signal emission means conducting the transmission through or by using sonic waves.

And, according to the present invention, there is provided a water detection sensor having signal transmission function, for detecting water adhering to or present upon a light-permeable substrate, comprising:

light-permeable substrate;

light emitting means for introducing detection light into said light-permeable substrate;

light receiving means for detecting reflected detection light, said reflected detection light being reflected by total internal reflection within said substrate;

a signal transmission antenna for transmitting the signals using radio waves; and

a signal processing portion,
wherein said light emitting means and said light receiving means are provided on an interior side surface of said substrate, and wherein said signal transmitting antenna and said signal processing portion are provided near said light emitting means and said light receiving means.

With this arrangement, the applicability of the sensor is widened. Further, the water detection sensor, with the light emitting means and the light receiving means, and also the transmission antenna and the signal processing portion, can be provided commonly within a single space, thereby obtaining advantageous space-saving benefits.

Preferred embodiments of the invention will now be described, by way of example only, and with reference to the accompanying drawings in which:

Fig. 1 is a perspective view of a front portion of a car installed with a water drop detection sensor having a signal transmission function according to the present invention;

Fig. 2 is an explanatory view of the structure of a water drop detection sensor having a signal transmission function according to a first embodiment of the present invention;

Fig. 3 is a block diagram of a water drop detection sensor having a signal transmission function according to the first through fourth embodiment of the present invention, being applied to a wiper control system and also to an automatic toll system;

Fig. 4 is an explanatory view of the structure of a water drop detection sensor having a signal transmission function according to a second embodiment of the present invention;

Fig. 5 is an explanatory View of the structure of a water drop detection sensor having a signal transmission function according to a third embodiment of the present invention, and in particular, Fig. 5 (a) shows a cross-section view and Fig. 5 (b) a rear side view thereof;

Fig. 6 is an explanatory view of the structure of a water drop detection sensor having a signal transmission function according to a fourth embodiment of the present invention, and in particular, Fig. 6 (a) shows a cross-section view and Fig. 6 (b) a rear side view thereof;

Fig. 7 is an explanatory view of the structure of the water drop detection sensor having a signal transmission function according to a fifth embodiment of the present invention, and in particular, Fig. 7 (a) shows a cross-section view and Fig. 7 (b) a rear side view thereof;

Fig. 8 is a block diagram of a water drop detection sensor having a signal transmission function according to the fifth embodiment of the present invention, being applied to the wiper control system and also to the automatic toll system; and

Fig. 9 is an explanatory view of the structure of the conventional water drop detection sensor.

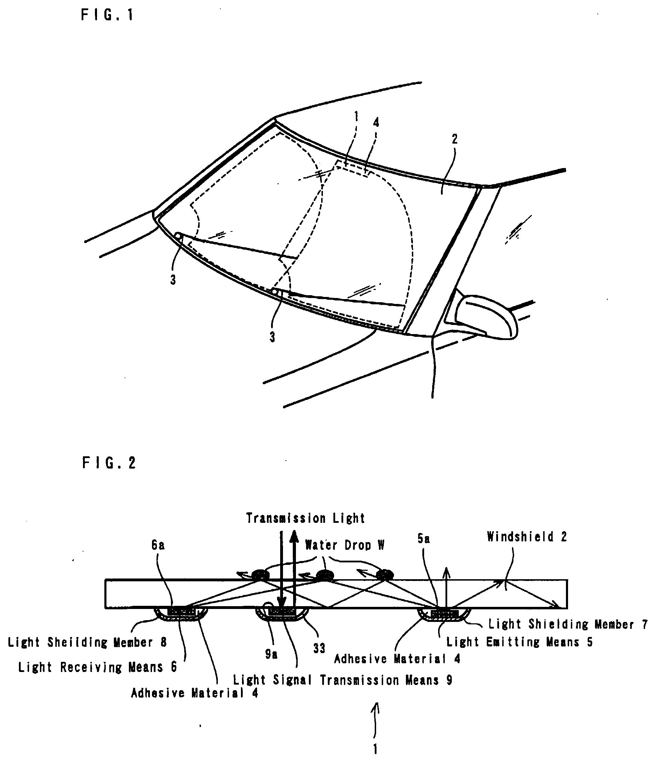

As shown in Fig. 1, a water drop detection sensor 1, 21... having a signal transmission function is attached or fixed onto an interior surface of a windshield 2 of a car with an adhesive material 4, and the area swept by one or more external wiping blades comprises the wiping area.

The windshield 2 is made from soda lime glass having a thickness of 5 mm and mainly containing $SiO_2$, for example.

As shown in Fig. 2, the water drop detection sensor 1 according to the first embodiment of the present invention comprises a light emitting means 5 for emitting a detection light and a light receiving means 6 for detecting the detection light, and a light signal transmission means 9 for transmitting information using light waves to and from outside devices. And, the light emitting means 5 and the light receiving means 6 are provided with a predetermined distance between them on the interior surface of the windshield 2, opposing the light emitting surface 5a and the light receiving surface 6a of the windshield 2 by adhesive materials 4.

The light signal transmission means 9 for transmitting information is described above as one example of a transmission means. However, it can be constructed by a sonic wave transmission means in place thereof.

The reason for fixing the light emitting means 5 and the light receiving means 6 on the interior surface of the windshield 2 with the predetermined distance thereinbetween is to maintain or ensure a predetermined area (i.e., area in which total internal reflection occurs) for detection upon the outside surface of the windshield 2, while keeping any loss of detection light emitted from the light emitting means 5 to be less than a predetermined level by making the light path from the light emitting means 5 to the light receiving means 6 as short as possible.

Also, the light signal transmission means 9 is fixed with the adhesive material 4, opposing the signal transmission surface 32a thereof, to the windshield in the same manner as the light receiving means 6, along a line drawn between the light emitting means 5 and the light receiving means 6 or in the vicinity thereof, and in between the light emitting means 5 and the light receiving means 6.

As the adhesive material 4, there is selected an adhesive, such as an epoxy adhesive or an ultraviolet ray-curable epoxy adhesive, which has a refractive index approximately equal to the refractive index (1.48) of the windshield 2. Further, after adhering or affixing the light emitting means 5 and the light receiving means 6 onto the interior surface of the windshield 2 with a transparent adhesive of silicon, it is also possible to fix the light emitting means 5 and the light receiving means 6 thereto by burying them into the two portions of adhesive material 4.

Furthermore, there are provided light shielding members 7 and 8 for covering the adhesive material 4 put on the windshield 2, for fixing the light emitting means 5 and the light receiving means 6 thereto.

Both light shielding members 7 and 8 are made of resin or metal for optically shielding the adhesive material portions 4, and light shielding member 7 has the function of preventing the light emitted from the light emitting means 5 from escaping unnecessarily, while light shielding member 8 prevents external ambient light from entering into the light receiving means 6 directly from the outside.

Therefore, any light escaping from the light emitting means 5 will not propagate through the inside of the windshield 2, nor enter into the light receiving means 6 directly.

Also, each of the contacting surfaces between both light shielding members 7 and 8 and the adhesive material 4, i.e., each surface of the light shielding members 7 and 8 opposite to the light emitting means 5 and the light receiving means 6, may be light reflecting surfaces.

Further, each of the contacting surfaces between both light shielding members 7 and 8 and the adhesive material 4, i.e., each surface of the light shielding members 7 and 8 opposite to the light emitting means 5 and the light receiving means 6, may be formed with a concave mirror surface.

With the provision of the property of light reflection or the concave mirror surface on the surface that contacts with the adhesive material 4 of the light shielding members 7 and 8 in this manner, any light emitted from the light emitting means 5 to the rear or to the sides can be collected and focused so as to propagate into the windshield 2 and be used as the detection light, Further with this, any of the emitted detection light which does not enter into the light receiving means 6 by propagating in the inside of the windshield 2 can enter into the light receiving means 6 by reflecting upon the light shielding member 8, thereby obtaining an effective utilization of the light.

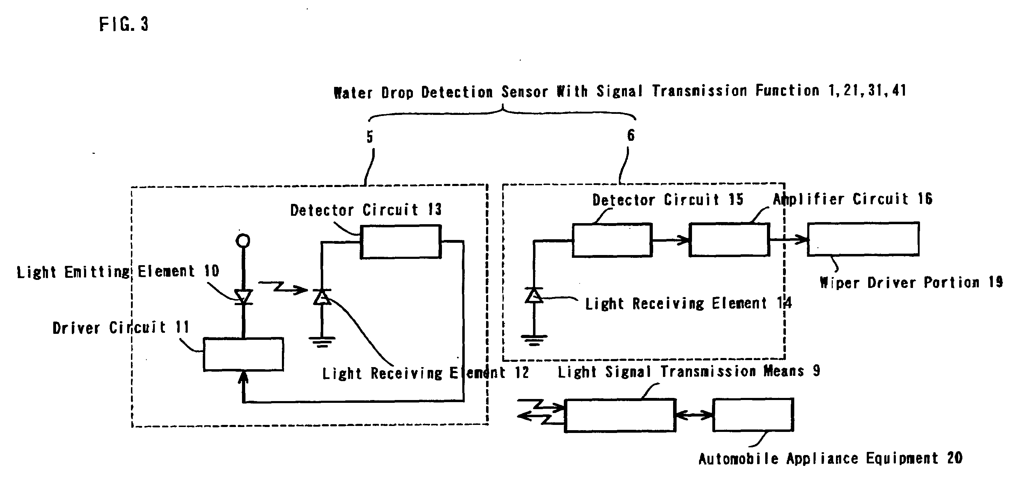

The light emitting moans 5, as shown in Fig. 3, comprises a light emitting element 10 -- such as a light emitting diode (LED) or a laser diode (LE) -- a driver circuit 11 for driving the light emitting element 10 to output the light which is modulated with a predetermined frequency, a light receiving element 12, ouch as a photo diode (PD) for monitoring the output level of the light emitting element 10, and a detector circuit 13 for removing a signal corresponding to the modulation component from the output signal of the light receiving element 12 so as to feed it back to the driver circuit 11. The driver circuit 11 controls the driving current flowing through the light emitting element 10 so as to maintain the output signal of the detector circuit 13 at a desired output level.

The light receiving means 6, as shown in Fig. 3, comprises a light receiving element 14, such as a PD, a detector circuit 15 for removing a signal corresponding to the modulation component modulated by the driver circuit 11 of the light emitting element 10 from the output signal of the light receiving element 14, a detector circuit 15 for picking up the output signal of the light receiving element 14, and further comprises an amplifier circuit 16 for amplifying and arithmetically processing an output signal of the detector circuit 15.

The output signal of the amplifier circuit 16 is inputted into a wiper driver portion 19 to be used in controlling the wipers.

Also, the light signal transmission means 9 is constructed with a light emitting element, a light receiving element and a modulator/demodulator, etc., and is connected to an equipment or device applied to or installed in the automobile. The light signal emission means 9 and the automobile appliance equipment 20 are used in, for example, an automatic toll system, i.e., for conducting optical communication between beacons (such as an inlet beacon, a notice beacon, a toll beacon, etc.), thereby executing toll processing through communication of information related to fees, etc., at an entrance or exit ramp of a freeway or other highway, or related to the model or type of car, etc.

However, the light emitting means 5 can be constructed with only the light emitting element 10, or with the light emitting element 10 and the light receiving element 12 for monitoring, while providing the other elements -- such as the driver circuit 11 and the detector circuit 13, etc. -- in another place separately. Also, the light receiving means 6 can be constructed with only the light receiving element 14, while providing the detector circuit 15 and the amplifier circuit 16. etc., in another place separately. Further, the light signal transmission means 9 also can be constructed with only the light emitting element and the light receiving element, while providing the modulator/demodulator and so on in another place separately.

Operation of the water drop detection sensor having the signal transmission function 1 constructed as described above will now be explained.

The light emitted from the light emitting means 5 is irradiated in every direction, in the case where the light emitting element 11 is an LED, or otherwise is irradiated substantially in one direction, in the case where the light emitting element 11 is an LD.

The emitted light enters into the inside of the windshield 2 through the adhesive material 4, which is substantially transparent. The light emitted from the light emitting means 5, however, propagates straight on without refraction at the boundary surface between the adhesive material 4 and the windshield 2 since the adhesive material 4 is so selected to have a refraction index approximately equal to that of the windshield 2.

As shown in Fig. 2, any light entering into the inside of the windshield 2 at an incident angle less than a critical angle transmits through the windshield 2 to the outside.

Further, in a case where no water drops W adhere upon either the outside or the interior surface of the windshield 2, any light entering into the inside of the windshield 2 at an incident angle greater than the critical angle penetrates through the inside of the windshield 2 and alternately experiences total internal reflections at the boundary surface between the outside surface of the windshield 2 and the ambient air, and at the boundary surface between the interior surface of the windshield 2 and the (interior) ambient air.

That light which experiences total internal reflection inside the windshield 2 will subsequently propagate so as to enter into the light receiving means 6.

Here, for obtaining the incident angle at which the total internal reflection occurs upon the boundary surface between the air and the glass, i.e., the critical angle, the following calculation can be made using Snell's law.

A general equation of Snell's law is expressed by equation 1 (Eq. 1) below, where, $\alpha$ and $\alpha_0$ represent angles with respect to a normal line on the boundary surface between two materials of refractive index n and $n_0$ ($\alpha$: incident angle, $\alpha_0$: refraction angle):

$$n_0 \sin \alpha_0 = n \sin \alpha \qquad \text{(Eq. 1)}$$

When the refractive index of the glass is n=1.48, and since the refractive index $n_0$ of air is $n_0$=1, the necessary condition for the incident angle $\alpha$ for total internal reflection to occur inside the glass is that the refraction angle $\alpha_0$ is greater than or equal to 90°, i.e. $\alpha_0 \geq$ 90°. The incident angle $\alpha$ in that instance is $\alpha \geq$ 42.5° (from Eq. 1).

Accordingly, if the incident angle $\alpha$ is equal to or greater than the critical angle (42.5°), total internal reflection occurs inside the glass medium.

On the other hand, even in a case where water (drops or other) adheres to or is present upon the glass, the condition of the incident angle $\alpha$ for total internal reflection to occur upon the boundary surface between the water and the glass inside the glass is $\alpha \geq$ 64.0°, found by making the same calculation assuming that the refractive index of water is $n_0$=1.33.

Accordingly, if the incident angle $\alpha$ is equal to or greater than the critical angle (64.0°), total internal reflection occurs inside the glass medium.

Accordingly, if the incident angle $\alpha$ lies in the region from 42.5° to 64.0° (42.5° $\leq \alpha \leq$ 64.0°), total internal reflection occurs inside the glass when no water adheres to or is present on the glass, while no total internal reflection occurs when the water adheres to or is present on the glass, i.e., the light escapes from the inside of the glass to the outside through the water.

For causing such a reflection, the incident angle of the light which is emitted from the light emitting means 5 is set by adjusting the position for fixing the light emitting means 5 to satisfy the condition for the incident angle $\alpha$ (42.50° $\leq \alpha \leq$ 64.0°). Also, since the incident angle of the reflected light entering into the light receiving means 6 is in a relationship that is symmetric with respect to the light emitting means 5, the fixing position of the light receiving means 6 is also adjusted so as to suitably receive the reflected light, avoiding any leakage thereof.

Therefore, in a case where a water drops W adhere upon either one of the outside surface or the interior surface of the windshield 2 -- or upon both of them -- the propagating light penetrates through the water drops W outside of the windshield 2, thereby reducing the amount of light reaching light receiving means 6.

Therefore, the quantity of plural water drops W can be detected by detecting the reduced amount of light and performing a calculation on the basis thereof.

According to the present invention, since all the light that satisfies the condition for the incident angle $\alpha$ ($42.5° \leq \alpha \leq 64,0°$) can be utilized, the detection surface on which the water drops W can be detected can be a reflection surface formed from a collection of a large number of reflection points. Therefore, the area for detecting the water drops W comes to be large, compared to the case of detecting the water drops W adhering to or present upon only the reflection points, thereby improving the accuracy of detection.

As indicated in Fig. 3, the water drop detection sensor 1 provides an input to the wiper driver portion 19 with an output signal corresponding to the amount of water drops W detected.

Also, the wiper driver portion 19 initiates operation of the wiper 3 at intervals corresponding to the mount of water drops W when the detected amount of water drops W exceeds a preset value, and it stops the operation of the wiper 3 when the detected amount of water drops W comes to be less than a preset value.

When the automobile uses a toll road, the light signal transmission means 9 conducts optical communication (communicates using optical waves) between beacons (such as an inlet bacon, a notice beacon, a toll beacon, etc.), thereby executing tall processing through communication of information related to fees at an entrance or exit of the toll road, to the model of the car, etc.

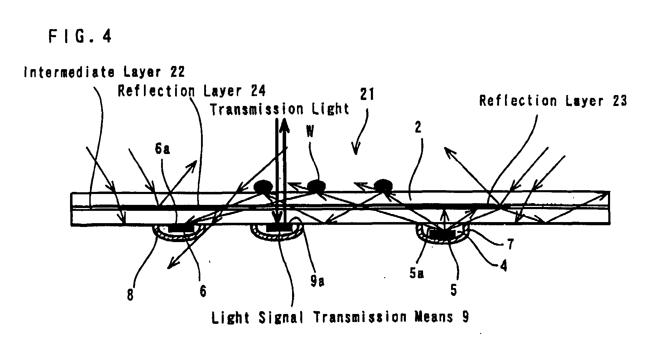

As shown in Fig. 4, a water drop detection sensor 21 having a light signal transmission function according to the second embodiment of the present invention comprises the light emitting means 5 and the light receiving means 6, both bonded on the windshield 2 including an intermediate layer 22, wherein reflection layers or films 23 and 24 are formed an the portions opposing the light emitting surface 5a of light emitting means 5 and to the light receiving surface 6a of the light receiving means 6 on the intermediate layer 22.

The light signal transmission means 9 for transmitting information is described above as one example of a transmission means. However, it can be constructed by a sonic wave transmission means in place thereof. The construction of the other elements is same as those of the water drop detection sensor 1 having the light signal transmission shown in Fig. 2.

The reflection layer 23 is provided for preventing leakage of the light to the outside, which light does not experience the total Infernal reflection within the Inside of the windshield 2 of the light emitted from the light emitting means 5.

The other reflection layer 24 is provided for preventing the light receiving means 6 from receiving any ambient light. However, it does this in such an area that it does not shield the incident light entering into the light receiving element which has experienced total internal reflection within the windshield 2.

The functions of the water drop detection sensor 21 having the light signal transmission function, which is constructed in the above is the same as those of the water drop detection sensor 1, except that the reflection layers 23 and 24 are formed in a part of the intermediate layer 22.

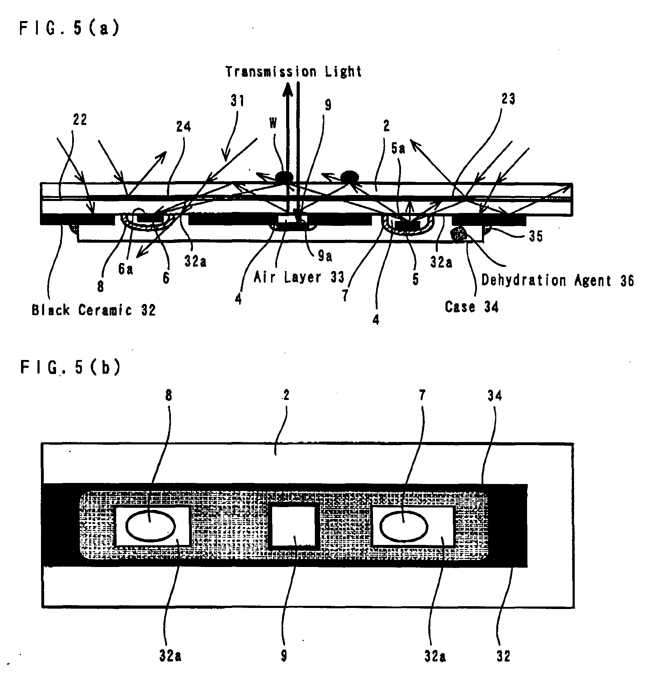

As shown in Fig. 5, in a water drop detection sensor 31 having the light signal transmission function according to the third embodiment of the present invention, a belt-like black ceramic member 32 is painted or pasted on the interior surface of the windshield 2, in particular in the periphery portion thereof, and a non-pasted portion 32a in formed in the middle of the black ceramic member 32. And in the non-pasted portion 32a, the light emitting means 5 and the light receiving means 6 are fixed through the adhesive material 4.

Further, on the portion where the detection light emitted from the light emitting means 5 undergoes the total internal reflection, the non-pasted portion 32a of the black ceramic member 32 is formed for causing the total internal reflection under the same condition, forming the boundary surface between the air in the same manner as on the outside surface of the windshield 2.

And in an area or portion of the non-pasted portion 32a, there is fixed the light signal transmission means 9 with the adhesive material 4, opposing the signal transmission surface, onto the interior side surface of the windshield 2 through an air layer 33. The air layer 33 is provided for obtaining the condition of total infernal reflection, the same as that for the outer surface side of the windshield 2.

The light signal transmission means 9 for transmitting information is described above as one example of a transmission means. However, it can be constructed by a sonic wave transmission means in place thereof.

Further, the light emitting means 5 and the light receiving means 6 are covered with a case 34 of glass, resin, ceramics, or metal. The case 34 is fixed on the black ceramic member 32 through a seal member 35 which also functions as the adhesive material, thereby defining a sealed space enclosed by the case 34 and the windshield 2.

Within the air layer 33 defined by the interior side surface of the windshield 2 and the light signal transmission means 32, there is enclosed a dehydration agent or dry air, such as a molecular sieve, for protection from condensation of dew on the non-pasted portion 32a of the black ceramic member 32 which functions as the reflection point. Further, within the sealed space defined by the case 34 and the windshield 2, dehydration agent 36, such as the molecular sieve, or dry air is also enclosed.

However, the construction other than the above is the same as that of the water drop detection sensor 21 having the light signal transmission function shown in Fig. 4.

The place pasted with the black ceramic member 32 of the windshield 2, where the case 33 is fixed, is also the place where an interior mirror is attached. Therefore, by utilizing the mounting base of the interior mirror and the case in common, it is possible to save on space required for attaching both.

However, as the method for fixing or mounting the case 34 onto the black ceramic member 32, other than by fixing it with the seal member 35 having the adhering function as mentioned above, the case 34 can be fixed on a stopping member by screws at the flange portion thereof, after fixing the stopping member on the black ceramic member 32 with the adhesive material.

The function of the water drop detection sensor 31 having the light signal transmission function, as constructed as in the above is the same as that of the water drop detection sensor 21 having the light signal transmission function shown in Fig. 4, except for the function due to the fixation of the light emitting means 5 and the light receiving means 6 and the ambient light receiving means 32 in the portion of the belt-like black ceramic member 32 which is painted or pasted on the interior surface of the windshield 2.

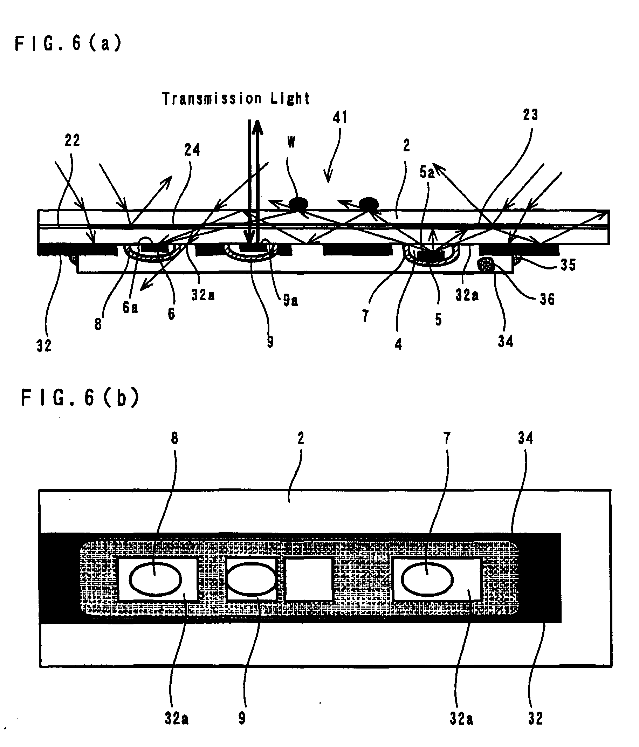

As shown in Fig. 6, a water drop detection sensor 41 having the light signal transmission function according to a fourth embodiment of the present invention is the same as the water drop detection sensor 31 having the light signal transmission function shown in Fig. 5 in the construction thereof, except for the fixation of the ambient light receiving means on the non-pasted portion 32a of the black ceramic member 32 with the adhesive material 4, except each portion on the interior side surface of the windshield 2 where the detection light experiences the total infernal reflection.

The light signal transmission means 9 for transmitting information is described above as one example of a transmission means. However, it can be constructed by a sonic wave transmission means in place thereof.

With the provision of the light signal transmission means 9 except each portion on the interior side surface of the windshield 2 where the detection light experiences the total infernal reflection, there is no necessity to form the air layer 53 for obtaining the same total infernal reflection condition as the outside surface, and further the light signal transmission means 9 can be fixed directly on the interior side surface of the windshield 2 in the same manner as the light emitting means 5 and the light receiving means 6.

The function of the water drop detection sensor 41 having the light signal transmission function, constructed as in the above is the same as that of the water drop detection sensor 31 shown in Fig. 5, except for the function due to the provision of the light signal transmission means 9 except each portion on the interior side surface of the windshield 2 where the detection light experiences the total infernal reflection.

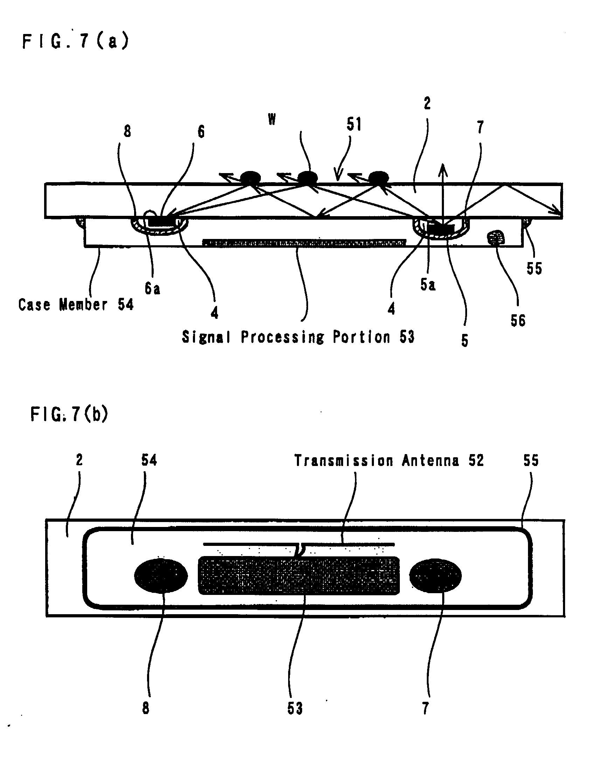

As shown in Fig. 7, a water drop detection sensor 51 having the light signal transmission function according to a fifth embodiment of the present invention comprises the light emitting means 5 for emitting the detection light, the light receiving means 6 for receiving that detection light, a transmission antenna 52 for transmitting the signal using radio waves to and from an outside device, and a signal processing portion 53 for processing the signal to be transmitted by the transmission antenna 52.

Moreover, the Light emitting means 5 and the light receiving means 6 are covered with a radio wave-permeable case member 54 made of glass or resin in a box-like shape having an opening in the bottom surface thereof. The case member 54 is fixed on the interior side surface of the windshield 2 through adhesive material 55 which also functions as the seal member, thereby defining a sealed space enclosed by the case member 54 and the windshield 2. Within the sealed space defined by the case member 54 and the windshield 2, there is enclosed or filled with a dehydration agent 56, such as a molecular sieve, or dry air, in place thereof.

However, the construction for detecting the water drops W is the same as that of the water drop detection sensor 1 having the light signal transmission function shown in Fig. 2.

And the transmission antenna 52 and the signal processing portion 53, being connected, are provided on an inner surface of the case member 54 between light emitting means 5 and the light receiving means 6.

For example, when the case member 54 is made of glass having a refraction index of 1.48, the transmission antenna 52 manufactured on the glass is 17.1 mm in the length, comprising a so-called "half-wave" dipole antenna for a radio wave of 5.8 GHz frequency -- which is used in common automatic toll systems. Also, the half-wave dipole antenna comes to be about 7.8 mm in length when the frequency of the radio waves is 13 GHz or more or less, which is utilized for satellite broadcasting or communication.

An antenna that is further small-sized can be manufactured if a material of high dielectric constant, such as ceramic, is used for the substrate for manufacturing the antenna thereon in place of glass. In a case where the frequency of the radio waves to be used is high, the antenna can be short in length, in which case it can be manufactured in the shape of a rod inside the case member 54.

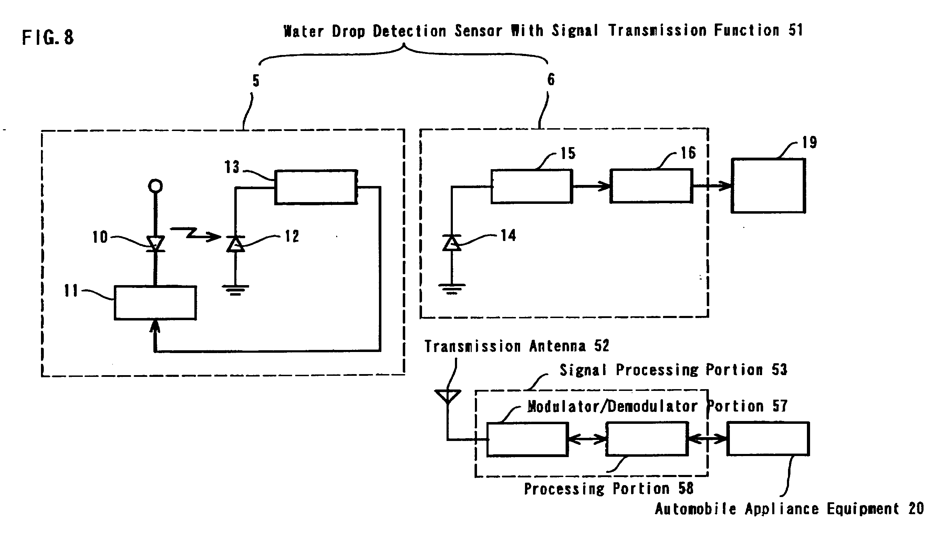

The signal processing portion 53 comprises, as shown in Fig. 8, a modulator/demodulator portion 57 and a processing portion 58 which can be constructed with a single purpose IC and/or memory, wherein the modulator/demodulator portion 57 is connected with the transmission antenna 52, while the processing portion 53 is connected to the automobile appliance equipment 20 to be used in the automatic toll system. Also, it is possible to provide or mount only a part of the signal processing portion 53 in the case member 54, and to mount the other components in another place.

However, the operations of the water drop detection sensor 51 having signal transmission function as constructed in the above is the same as that of the water drop detection sensor 1 having the light signal transmission function shown in Fig. 2, except for the function of the transmission antenna 52 for transmitting information using radio waves between the outside, and the function of the signal processing portion 53 for processing the signals to be transmitted by the transmission antenna 52.

When the automobile uses a toll road, the transmission antenna 52 and the signal processing portion 53 conduct communication between beacons (such as an inlet bacon, a notice beacon, a toll beacon, etc.), with the automobile appliance equipment 20, thereby executing toll processing by communication on information related to the fee at an entrance or exit of the toll road or highway, or related to the model of the car, etc.

Further, as the light-permeable substrate constructing the water drop detection sensor 51 having the signal transmission function according to the present invention, other than the windshield 2 for use in a car, there can be used a glass substrate, such as a rear window of a car or a door mirror thereof, a window glass of a of railroad car, of a ship or of an aircraft, a window glass of building, a mirror of a washstand, or a traffic mirror standing on a corner or curved road, etc. In other words, the invention can be applied to any glass substrate or resin substrate through which light is permeable.

Note that the water drop detection signal obtained from the water drop detection sensor 51 having the signal transmission function can be applied also as a control signal for a wiper provided with the rear window or the door mirror, other than the wiper 3 provided with the windshield 2 of the car, and also can be used as a signal for initiating or regulating an anti-fog heater provided at the rear window or the door mirror of the car or in the mirror of a washstand.

## Claims

1. A water detection sensor also having a signal transmission function, for detecting water adhering to or present upon a light permeable substrate (2), comprising:

    a light permeable substrate (2);
    light emitting means (5) for introducing detection light into said substrate;
    light receiving means (6) for detecting reflected detection light, said reflected detection light being reflected by total internal reflection within said substrate; and
    signal transmission means (9) for conducting signal transmission,
    wherein said light emitting means and said light receiving means are provided on an interior side surface of said substrate, and said signal transmission means is provided on the interior side surface of said substrate remote from reflection points of said detection light reflected therein.

2. A water detection sensor as claimed in claim 1, further comprising:

    an intermediate layer (22) in said light permeable substrate (2),
    wherein a portion of said intermediate layer opposing said light receiving means is formed with a reflection layer.

3. A water detection sensor as claimed in claim 1, further comprising:

    an intermediate layer (22) in said light permeable substrate (2);
    black ceramic (32) provided on portions of said substrate;
    said reflected detection light being reflected by total internal reflection upon reflection points at parts of said substrate where no black ceramic is provided; and
    wherein said signal transmission means (9) is provided on the interior side of said substrate at a part where no black ceramic is provided.

4. A water detection sensor also having a signal transmission function, for detecting water adhering to or present upon a light permeable substrate (2), comprising:

    a light permeable substrate (2) including an intermediate layer (22) therein;
    light emitting means (5) for introducing detection light into said substrate;
    black ceramic (32) provided on portions of said substrate;
    light receiving means (6) for detecting reflected detection light, said reflected detection light being reflected by total internal reflection upon points at parts of said substrate where no black ceramic is provided; and
    signal transmission means (9) for conducting signal transmission,
    wherein said light emitting means and said light receiving means are provided on an interior side surface of said substrate, and said signal transmission means is provided at a part of said substrate where no black ceramic is provided and an air layer (33) is provided on the interior side surface of said substrate between said transmission means and said substrate.

5. A water detection sensor having signal transmission function as defined in one of claims 1 to 4, wherein said signal transmission means (9) conducts the signal transmission using light waves.

6. A water detection sensor having signal transmission function as defined in one of claims 1 to 4, wherein said signal transmission means (9) conducts the signal transmission using sonic waves.

7. A water detection sensor also having a signal transmission function, for detecting water adhering to or present upon a light-permeable substrate, comprising:

   a light-permeable substrate (2);
   light emitting means (5) for introducing detection light into said light-permeable substrate;
   light receiving means (6) for detecting reflected detection light, said reflected detection light being reflected by total internal reflection within said substrate;
   a signal transmission antenna (52) for transmitting signals using radio waves;
   a signal processing portion (53); and
   wherein said light emitting means and said light receiving means are provided on an interior side surface of said substrate, and said signal transmitting antenna and said signal processing portion are provided near said light emitting means and said light receiving means.

FIG. 1

FIG. 2

Transmission Light

6a

Water Drop W

5a

Windshield 2

Light Shielding Member 8

Light Shielding Member 7

Light Receiving Means 6

9a

33

Light Emitting Means 5

Adhesive Material 4

Adhesive Material 4

Light Signal Transmission Means 9

1

FIG. 3

Water Drop Detection Sensor With Signal Transmission Function 1,21,31,41

5                                    6

Detector Circuit 13          Detector Circuit 15    Amplifier Circuit 16

Light Emitting Element 10                                                  Wiper Driver Portion 19

Driver Circuit 11                          Light Receiving Element 14

Light Receiving Element 12    Light Signal Transmission Means 9

Automobile Appliance Equipment 20

EP 0 947 403 A2

# FIG. 4

Intermediate Layer 22
Reflection Layer 24
Transmission Light    21
   W    2
Reflection Layer 23

6a

7

8    6    9a    5a    5    4

Light Signal Transmission Means 9

F I G. 5 (a)

Transmission Light

Black Ceramic 32

F I G. 5 (b)

FIG.6(a)

FIG.6(b)

FIG. 7 (a)

Case Member 54

Signal Processing Portion 53

FIG. 7 (b)

Transmission Antenna 52

FIG. 8

Water Drop Detection Sensor With Signal Transmission Function 51

Transmission Antenna 52

Signal Processing Portion 53

Modulator/Demodulator Portion 57

Processing Portion 58

Automobile Appliance Equipment 20

EP 0 947 403 A2

FIG. 9

Total Internal Reflection Point

Detection Surface

101

100

102

103

104